Europäisches Patentamt

European Patent Office

Office européen des brevets

(11) Publication number: **0 228 171**
**B1**

(12) **EUROPEAN PATENT SPECIFICATION**

(45) Date of publication of patent specification: **25.07.90**

(51) Int. Cl.⁵: **B 23 K 31/02, B 21 D 47/00**

(21) Application number: **86308837.3**

(22) Date of filing: **13.11.86**

(54) Method of preventing sag of panel and apparatus thereof.

(30) Priority: **29.11.85 JP 269858/85**

(43) Date of publication of application:
**08.07.87 Bulletin 87/28**

(45) Publication of the grant of the patent:
**25.07.90 Bulletin 90/30**

(84) Designated Contracting States:
**DE FR GB**

(56) References cited:
**DE-A-2 602 605**
**DE-C-1 048 551**
**US-A-3 020 867**

(73) Proprietor: **Kawasaki Jukogyo Kabushiki Kaisha**
**1-1 Higashikawasakicho 3-chome Chuo-ku**
**Kobe-shi Hyogo 650-91 (JP)**

(72) Inventor: **Sakaguchi, Akira**
**2-13 Sekimoricho 3-chome Suma-ku**
**Kobe-shi Hyogo 654 (JP)**
Inventor: **Uchibe, Hisashi**
**77 Jiyugaoka Honmachi 1-chome**
**Miki-shi Hyogo 673-04 (JP)**
Inventor: **Tange, Toshiyuki**
**1 Izumigaoka 4-chome Tarumi-ku**
**Kobe-shi Hyogo 655 (JP)**

(74) Representative: **Carpenter, David et al**
**MARKS & CLERK Alpha Tower Suffolk Street**
**Queensway**
**Birmingham B1 1TT (GB)**

**Description**

The present invention relates to a method of panel construction having as an object minimisation of the occurrence of the "sag" of a panel which is used for assembling the roof structures, side wall structures and the like of inter alia, vehicles, ships, buildings, and also to an apparatus therefor.

In recent years, there has been a move towards weight reduction in such structures and thus the use of thinner structures has accordingly been promoted. Soft steel, stainless steel, aluminum alloys and the like are usually applied to the outer plates of the panels. With the use of thinner material "sag" of the outer plate after welding and assemblage is more of a problem, both the local strength of a "sagging" part and the external appearance of the panel being prejudiced.

With the intention of eliminating welding distortion, there has been disclosed a measure wherein a large number of sheets of standard shape are formed into an elongate outer plate by welding, and while loading the plate to effect stretching, the plate is attached to a skeleton (refer to, for example, the official gazette of Japanese Patent Application Publication No. 53-39261). It has also been proposed in addition to preheat the elongate outer panel to effect thermal expansion, whereupon the outer plate is attached to the skeleton (refer to, for example, the official gazette of Japanese Patent Application Publication No. 54-20185). However, both of these proposals require a large scale stretching device and heating device and involve enormous installation costs as well as large numbers of process steps. As another drawback, it is not easy to effect fine control over the set heating temperature. There has also been proposed a measure wherein an outer plate of comparatively small size is put in a heating box, and the whole outer plate is heated to a predetermined temperature and is thereafter welded to a skeleton (refer to, for example, the official gazette of Japanese Patent Application Laid-open No. 60-64791). However, the heating box is complicated in structure. Moreover, as the outer plate becomes larger in size, the heating box needs to be larger in scale in proportion, and so incurs the problems that a large floor space and a workshop of large area are required and that the installation cost becomes high.

US Patent 3020867 also discloses a heating and welding method which requires extensive and costly apparatus since it heats the panel from below after lifting the plate of the panel away from the skeleton of the panel. The panel is then replaced but heating is continued until the plate and skeleton have been united by arc-welding.

In view of the problems of the prior art, the present invention has for an object to provide a method and apparatus for panel construction whereby the occurrence of "sag" is minimised by simple steps and an equipment of simple construction.

In accordance with a first aspect of the present invention there is provided a method of panel construction comprising heating a metallic panel plate to cause it to expand, securing the heated plate to a metallic skeleton, and allowing the plate to cool so as to develop a tensile residual stress in the plate owing to thermal contraction so as to prevent sag of the panel, characterized by, positioning the plate on top of the skeleton supported by a rest, heating the plate to a predetermined temperature by a radiant heater means positioned above the plate and directed downwardly, moving the heater means from above the plate, and quickly tack welding then finish welding the panel to the skeleton prior to the cooling step.

In accordance with a second aspect of the present invention there is provided apparatus for use in panel construction comprising a tentative placing rest for supporting a panel skeleton and a panel plate laid on the skeleton and radiant heater means, characterized in that said heater means is carried above said rest and presented downwardly towards said rest by a holding truck movable lengthwise of the rest along guide rails laid lengthwise of the rest, so that the heater means can be moved to and from a position over a panel plate supported on a skeleton on said rest.

It will be recognised that, the plate is preheated to the predetermined temperature to be thermally expanded by the radiation heating means before being attached to the skeleton, and it is thereafter welded, so that the tensile residual stress capable of checking the occurrence of the "sag" is developed in the plate by the thermal shrinkage deformation in the cooling process.

In the accompanying drawings:-

Figure 1 is an outward perspective view showing the essential portions of a panel fabricating apparatus in accordance with one example of the present invention;

Figure 2 is a front view, partly in section, showing radiation heating means;

Figure 3 is a bottom view of the radiation heating means;

Figure 4 is a diagram showing the cooling characteristic of a plate at the stage of natural cooling after heating; and

Figures 5, 6 and 7 are diagrams each showing a temperature distribution in the heating test of a plate test piece.

Embodiments of the present invention will now be described with reference to the drawings.

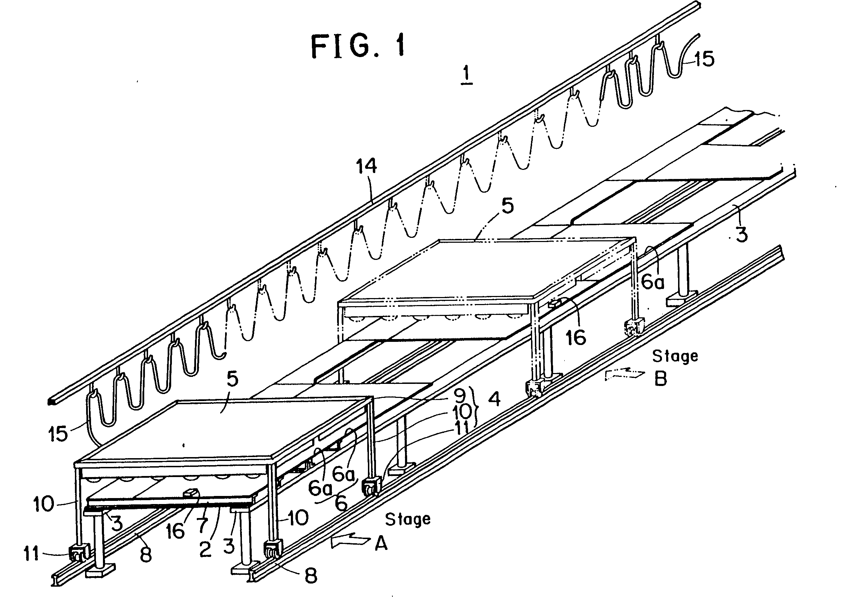

The panel fabricating apparatus 1 shown in Figure 1 exemplifies one suitable for use in fabricating a panel 2 for railway vehicles. It is constructed of a tentative placing rest 3, a holding truck 4 and radiation heating means 5.

More specifically, the rest 3 disposed on a floor is formed at a width and a length required for placing thereon a skeleton 7 to which an outer plate 6 is to be attached the plate 6 being constructed from a plurality of rectangular plates 6a. The truck 4 is movably set on rails 8, 8 which are laid along the length of the rest 3

2

at both sides thereof. The holding truck consists of a rectangular mounting frame 9 which is presented to the rest 3 from above, four supporting legs 10 which are joined to the four corners of the mounting frame so as to extend downwards therefrom, and casters 11 which are respectively disposed at the lower ends of the supporting legs. The radiation heating means 5 comprises a suitable number of heating units 13, in each of which heating elements 12 in the form of infrared lamps are directed downwards, and the heating means 5 is detachably mounted on the holding truck 4. The radiation heating means is so disposed that it can be moved by the holding truck 4 to a position over a plate 6a supported on the rest 3.

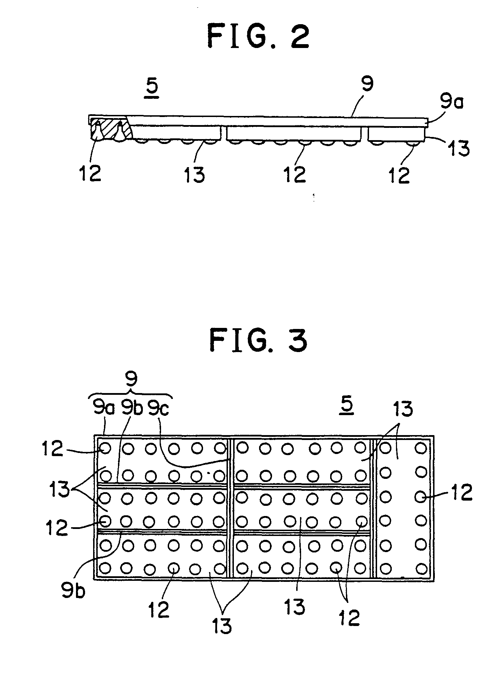

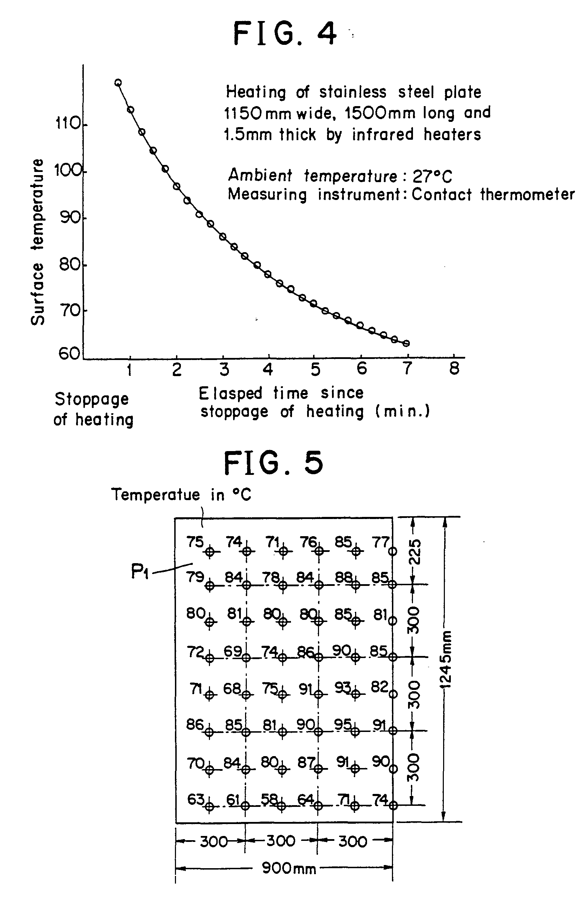

In Figures 2 and 3, the mounting frame 9 for the radiation heating means 5 is partitioned into a plurality of spaces of identical shape by a marginal frame 9a, longitudinal beams 9b and cross beams 9c to which angle steel members are applied (by way of example). The heating unit 13 installed in each of the spaces has an array of twelve heating elements 12. A feeder cord 15 (refer to Figure I) which has a plurality of parts suspended from a guide rail 14 so as to freely extend and contract is connected to the respective heating units 13. According to the material, thickness and heating area of the outer plate 6, the number of the heating units 13 to be installed or to be fed with electric power or the level of the electric power to be fed to the heating units can be increased or decreased, and the number of the heating elements 12 to be arranged or the heating capacity thereof can be increased or decreased. In addition, as the heating element 12, an infrared heater could be used in place of an infrared lamp. When control of heating temperatures is needed, temperature sensors 16 shown in Figure 1 are disposed in required numbers at the respective positions of the outer plate 6a to be heated at stage A, B and so on of the apparatus. It has been shown experimentally that, with the size of the panel shown in Figure 5, one or two sensors suffice for controlling the radiation heating means.

Next, a method of preventing the sag of the panel 2 will be described. First, the skeleton 7 is placed on the rest 3, and plates 6a are situated thereon. Thereafter, the holding truck 4 is moved to the stage A (refer to Figure 1) for heating the plate 6a at the front end part of the outer plate 6. The radiation heating means 5 is positioned over the outer plate 6, and the heating elements 12 are energized to preheat the plate 6a to a predetermined temperature T described later and to thermally expand it. At this time, not only the plate 6a but also the skeleton 7 is heated by heat conduction. Since, however, the parts of the skeleton in contact with the plate are of a small area ordinarily, the heat conduction poses no problem in practical use. When the plate 6a has reached the predetermined temperature, the holding truck 4 is moved away from the stage A so as to locate the radiation heating means 5 at stage B (indicated in chain lines in Figure 1). While the plate 6a in the stage B is being heated by the radiation heating means 5, the plate 6a in the stage A is quickly tacked and then finish-welded to the skeleton 7. Further, the plates 6a in and behind the stage B are heated, tacked and finish-welded by repeating the same operations as described above. It has been shown experimentally that, if the tack welding is promptly and reliably carried out, the plate 6a where heat still remains will not develop a considerable tensile stress, and that the plate after finish-welding to the skeleton, and cooling, can generate a sufficient residual stress. At the stage of finish welding, spot welding is suitable for the panel of this type, and continuous welding such as arc welding is unsuitable because it gives rise to distortions. The plate 6a fixed to the skeleton 7 by the finish welding develops atensile residual stress in the outer plate 6 owing to a thermal shrinkage deformation attendant upon the subsequent natural cooling, whereby the fabrication of the panel 2 free from any "sag" is completed. As regards the heating of the plate 6a, temperature control is performed by associating the detection signals of the temperature sensors 16 with the electric circuit of the heating elements 12. More specifically, one sensor may be set at the required lowest temperature and the other at the required highest temperature so as to control the heating temperature between them.

The predetermined temperature T at the step of heating a plate 6a is set so that the plate 6a may give rise to a required tensile residual stress, in consideration of the material of the plate 6a, the ambient temperature, the strength of the skeleton 7, the handling of the plate 6a after the heating, the period of time taken until the start of the finish welding since the tacking, and so forth. An example of the predetermined temperature T will be calculated in a case where a stainless steel plate 1.5 mm thick is employed for the plate 6a, the ambient temperature is about 20°C, and the period of time taken from heating and tacking until the start of the finish welding is about 1 minute.

It is known that the tensile residual stress necessary for preventing the occurrence of the welding distortion of the outer plate 6 after welding may be 15 kg/mm² or so. The temperature difference X between the outer plate 6 and the skeleton 7 on which this outer plate is to be mounted, for developing the above tensile residual stress is evaluated with the following formula:

$$X = k. \delta/\delta y$$

δ: tensile residual stress,
δy: yield stress or proof stress value,
k: temperature difference at which a tensile stress corresponding to δy develops.

When δ = 15 kg/mm², δy = 52.7 kg/mm² and k = 154°C are respectively substituted into the above formula, the temperature difference X becomes about 44°C. Meanwhile, a cooling rate near, e. g. 90°C is read to be: about 10 °C/min from the diagram of the cooling curve of the stainless steel plate after the heating thereof as shown in Figure 4. The temperature difference X is needed at the point of time at which the welding fixation of the outer plate 6 has ended. Therefore, assuming that the period of time taken since

3

EP 0 228 171 B1

the end of the heating until the completion of the tack welding be approximately 1 minute and that the ambient temperature, namely, the temperature of the skeleton 7 be 20°C, the heating target temperature of. the outer plate 6 becomes $20°C + 44°C + 10°C = 74°C$.

Accordingly, the predetermined temperature T of the outer plate 6 during the production of the product should desirably be set at approximately 80°C with some allowance made for the aforementioned heating target temperature.

In this connection, there will now be described the essential points of heating tests which were conducted as to conditions for uniformly heating at 80°C stainless steel plates of various shapes to be applied to the outer plates 6.

Figure 5 shows the surface temperatures of a plate measured when a test piece $P_1$ made of the stainless steel plate 1245 mm wide, 900 mm long and 1.5 mm thick was subjected to a heating test by the use of the heating elements constructed of infrared lamps. This heating test was carried out under the conditions that the heating elements numbering 36 were infrared lamps each having a power of 250 W, that the distance between the heating elements and the test piece $P_1$ was 175 mm, that the heating period of time was 5 minutes and that the ambient temperature was 29°C. Results obtained were the highest temperature of 95°C, the lowest temperature of 58°C, and an average temperature of 80°C. In order to ensure a sufficient temperature difference, the plate should preferably be heated a little more.

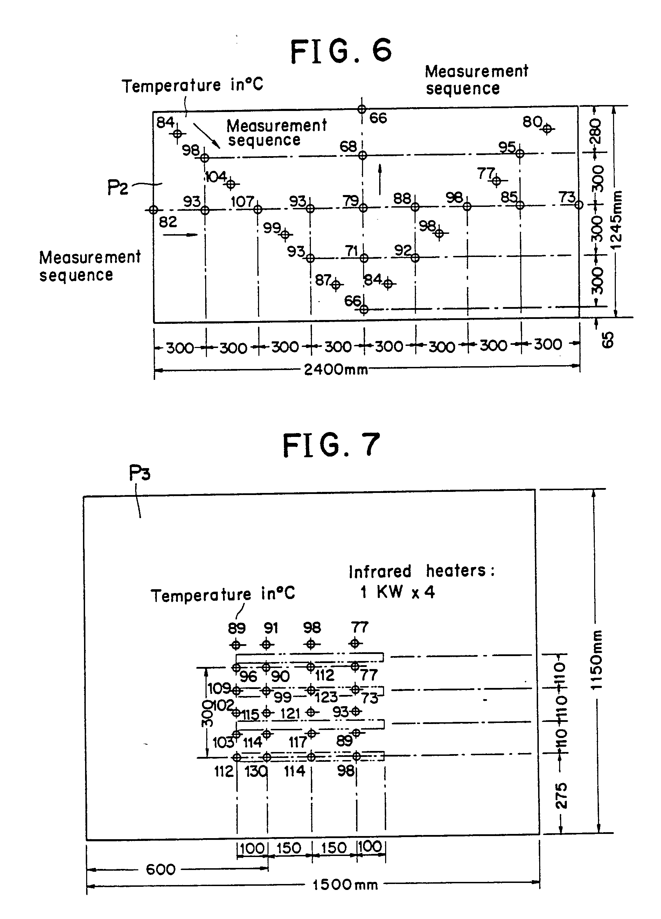

Figure 6 shows surface temperature measured when a test piece $P^2$ made of a stainless steel plate 1245 mm wide, 2400 mm long and 1.5 mm thick was subjected to a heating test by the use of the heating elements constructed of infrared lamps. This heating test was carried out under the conditions that the heating elements numbering 72 were infrared lamps each having a power of 250 W, that the distance between the heating elements and the test piece $P^2$ was 175 mm, that the heating period of time was 5 minutes and that the ambient temperature was 22°C. Results obtained were the highest temperature of 107°C, the lowest temperature of 66°C, and an average temperature of 86°C.

Further, Figure 7 shows surface temperatures measured when a part of a test piece $P_3$ made of a stainless steel plate 1150 mm wide, 1500 mm long and 1.5 mm thick was subjected to a heating test by the use of the heating elements constructed of infrared heaters. This heating test was carried out under the conditions that the heating elements numbering 4 were infrared heaters each having a power of 1 kW, that the distance between the heating elements and the test piece $P_3$ was 20 mm, that the heating period of time was 3 minutes and that the ambient temperature was 28°C. Results obtained were the highest temperature of 130°C, the lowest temperature of 73°C, and an average temperature of 102°C. Although the average temperature in this case exceeds the predetermined temperature T= 80°C stated before, it can be controlled to the aforementioned appropriate temperature by shortening the heating period of time, adjusting the arrangement of the heating elements or increasing the distance between the heating elements and the test piece.

In the embodiments, only a flat panel has been exemplified as the panel 2 which consists of the outer plate 6 and the skeleton 7. However, if the skeleton 7 exhibits a sufficient strength and can satisfactorily endure a tensile residual stress, a panel in the shape of a curved surface could be produced. In such circumstances desirably the radiation heating means 5 will be a shaped structure matching the curved surface.

Thus, according to the first aspect of performance of the invention, the occurrence of the sag of a plate can be prevented without being restricted by the size of the plate itself, and the number of heat sources can be adjusted at will in conformity with the material and dimensions of the plate. A further effect is that input energy can be readily adjusted and can be very simply controlled with sensors. According to the second aspect of performance of the invention, radiation heating means disposed so as to be movable relative to a position over a plate can smoothly continue the operations of heating, tack welding and finish welding. Further, the means can be readily adapted to the changes of the material, size and thickness of the plate by adjusting the number and conditions of heating elements. Accordingly, this aspect brings forth such excellent effects in the fabrication of a panel that the quality of the panel product is enhanced and that the sag eliminating operation after the welding operation in the prior art can be dispensed with to sharply reduce the number of steps. Above all, both the aspects are suited to a flow process and can render operations efficient.

**Claims**

1. A method of panel construction comprising heating a metallic panel plate to cause it to expand, securing the heated plate to a metallic skeleton, and allowing the plate to cool so as to develop a tensile residual stress in the plate owing to thermal contraction so as to prevent sag of the panel, characterized by, positioning the plate (6/6a) on top of the skeleton (7) supported by a rest (3), heating the plate to a predetermined temperature by a radiant heater means (12, 13) positioned above the plate and directed downwardly, moving the heater means (12, 13) from above the plate (6/6a), and quickly tack welding then finish welding the plate (6/6a) to the skeleton (7) prior to the cooling step.

2. A method as claimed in Claim 1 characterized in that said step of finish welding comprises spot-welding the panel (6/6a) to the skeleton (7).

4

# EP 0 228 171 B1

3. A method as claimed in Claim 1 or Claim 2 characterized in that control over said heater means is effected by one or more temperature sensors (16) associated with said plate (6/6a).

4. Apparatus for use in panel construction comprising a tentative placing rest (3) for supporting a panel skeleton (7) and a panel plate (6/6a) laid on the skeleton (7) and radiant heater means (12, 13) characterized in that said heater means (12, 13) is carried above said rest (3) by a holding truck (4) and directed downwardly towards said rest (3), the holding truck (4) being movable lengthwise of the rest (3) along guide rails (8) laid lengthwise of the rest (3), so as to move the heater means (12, 13) to and from a position over a panel plate (6/6a) supported on a skeleton (7) on said rest (3).

5. Apparatus as claimed in Claim 4 characterized in that said heater means (12, 13) includes infrared lamps.

6. Apparatus as claimed in Claim 4 characterized in that said heater means (12, 13) includes infrared heaters.


## Patentansprüche

1. Verfahren zur Paneelkonstruktion mit Erwärmen einer Metall-Paneelplatte so, daß sie sich ausdehnt, Sichern der erwärmten Platte an einem Metallgeripper, Erlauben, daß sich die Platte äbkült, so daß sich verbleibende Zugkräfte in der Platte aufgrund der thermischen Kontraktion entwickeln und damit Durchhängen des Paneels verhindern, gekennzeichnet durch Anordnen der Platte (6/6a) auf dem oberen Teil des Gerippes (7), der von einer Auflage (3) getragen wird, Erwärmen der Platte auf eine vorbestimmte Temperatur durch eine Strahlungsheizvorrichtung (12, 13), die oberhalb der Platte angeordnet ist, Bewegen der Heizvorrichtung (12, 13) von oberhalb der Platte (6/6a) und schnelles Festschweißen, dann Beenden des Schweißens der Platte (6/6a) auf das Geripper (7) vor dem Abkühlen.

2. Verfahren nach Anspruch 1, dadurch gekennzeichnet, daß das Beenden des Schweißens Punktschweißen des Paneels (6/6a) auf das Geripper (7) aufweist.

3. Verfahren nach Anspruch 1 oder 2 dadurch gekennzeichnet, daß die Steuerung der Heizvorrichtung durch einen oder mehrere Temperatursensoren (16) ausgeführt wird, die zu der Platte (6/6a) zugehörig sind.

4. Vorrichtung zur Benutzung bei der Paneelkonstruktion mit einer vorläufigen Auflage (3) zum Tragen eines Paneelgerippes (7) und einer Paneelplatte (6/6a), die auf das Geripper (7) gelegt ist und einer Strahlungsheizvorrichtung (12, 13), dadurch gekennzeichnet, daß die Heizvorrichtung (12, 13) oberhalb der Auflage (3) durch einen Haltewagen (4) getragen ist und abwärts zu der Auflage gerichtet ist, wobei der Haltewagen (4) in die Längsrichtung der Auflage (3) entlang von Führungsschienen 8, die in Längsrichtung der Auflage (3) gelegt sind, so bewegbar ist, daß er die Heizvorrichtung (12, 13) zu einer und von einer Stellung über der Paneelplatte (6/6a) bewegt, die auf einem Geripper (7) auf der Auflage (3) getragen ist.

5. Vorrichtung nach Anspruch 4, dadurch gekennzeichnet, daß die Heizvorrichtung (12, 13) Infrarotlampen enthält.

6. Vorrichtung nach Anspruch 4, dadurch gekennzeichnet, daß die Heizvorrichtung (12, 13) Infrarotheizer enthält.


## Revendications

1. Procédé de construction de panneaux, comprenant les étapes consistant à chauffer une plaque de panneau métallique pour la faire se dilater, à fixer la plaque chauffée sur une ossature métallique, et à laisser la plaque refroidir afin de développer une contrainte résiduelle de traction dans la plaque grâce à la contraction thermique de manière à empêcher la déformation du panneau, caractérisé par les étapes consistant à positionner la plaque (6/6a) sur le dessus de l'ossature (7) supportée par une console (3), à chauffer la plaque à une température prédéterminée par un moyen de chauffage rayonnant (12, 13) positionné au-dessus de la plaque et dirigé vers le bas, à déplacer le moyen de chauffage (12, 13) d'au-dessus de la plaque (6/6a), et à souder rapidement par points d'épinglage puis en finition la plaque (6/6a) sur l'ossature (7) avant l'étape de refroidissement.

2. Procédé selon la revendication 1, caractérisé en ce que l'étape de soudage de finition comprend le soudage par points du panneau (6/6a) sur l'ossature (7).

3. Procédé selon la revendication 1 ou 2, caractérisé en ce que la commande du moyen de chauffage est réalisée par un ou plusieurs capteurs de température (16) associés à la plaque (6/6a).

4. Dispositif à employer dans la construction de panneaux, comprenant une console de positionnement provisoire (3) pour supporter une ossature de panneau (7) et une plaque de panneau (6/6a) posée sur l'ossature (7), et un moyen de chauffage rayonnant (12, 13), caractérisé en ce que le moyen de chauffage (12, 13) est porté au-dessus de la console (3) par un chariot porteur (4) et dirigé vers le bas en direction de la console (3), le chariot porteur (4) étant déplaçable dans le sens longitudinal de la console (3) le long de rails de guidage (8) posés dans le sens longitudinal de la console (3), de manière à déplacer le moyen de chauffage (12, 13) vers et depuis une position au-dessus d'une plaque de panneau (6/6a) supportée sur une ossature (7) sur la console (3).

5. Dispositif selon la revendication 4, caractérisé en ce que le moyen de chauffage (12, 13) comprend des lampes à rayons infrarouge.

6. Dispositif selon la revendication 4, caractérisé en ce que le moyen de chauffage (12, 13) comprend des appareils de chauffage à rayons infrarouge.

FIG. 1

1

# FIG. 2

# FIG. 3

2

# FIG. 4

Heating of stainless steel plate
1150 mm wide, 1500mm long and
1.5mm thick by infrared heaters

Ambient temperature : 27°C
Measuring instrument : Contact thermometer

Surface temperature

Stoppage
of heating

Elasped time since
stoppage of heating (min.)

# FIG. 5

Temperatue in °C

# FIG. 6

Temperature in °C

Measurement sequence

# FIG. 7

Temperature in °C

Infrared heaters : 1 KW x 4